# DEMANDE DE BREVET EUROPEEN

(11) **EP 0 765 784 A1**
(43) Date de publication de la demande: **02.04.1997**
(21) Numéro de dépôt: 96115432.5
(22) Date de dépôt: 26.09.1996
(51) Int. Cl.: B60S 1/38

(54) **Essuie-glace muni d'un déflecteur souple comportant des moyens d'accrochage sur la raclette d'essuyage**

(30) Priorité: 29.09.1995 FR 9511505
(71) Demandeur: VALEO SYSTEMES D'ESSUYAGE, 78321 La Verrière (FR)
(72) Inventeur: Maubray, Daniel, 92130 Issy Les Moulineaux (FR)
(74) Mandataire: Gamonal, Didier

(57) **Abrégé**

L'invention concerne un essuie-glace de véhicule automobile, du type comportant un balai d'essuie-glace (12) muni d'une structure articulée (18) qui porte, au moyen d'une série de griffes (36), une raclette d'essuyage (20) en matériau souple, et du type comportant un déflecteur aérodynamique souple (40) monté sur le balai , caractérisé en ce que le déflecteur (40) comporte au moins une agrafe de fixation (42) sur la raclette (20) du balai (12).

## Description

L'invention concerne un essuie-glace muni d'un déflecteur souple comportant des moyens d'accrochage sur la raclette d'essuyage.

L'invention concerne plus particulièrement un essuie-glace de véhicule automobile, du type comportant un balai d'essuie-glace muni d'une structure articulée qui est déformable dans un plan longitudinal perpendiculaire à une vitre à essuyer et qui porte, au moyen d'une série de griffes agencées à chacune de ses extrémités terminales, une raclette d'essuyage en matériau souple, et qui plaque la raclette contre la vitre de sorte que la raclette en épouse le galbe, et du type comportant un déflecteur aérodynamique souple monté sur le balai.

Un déflecteur aérodynamique pour balai d'essuie-glace permet, d'une part, de fournir un appui aérodynamique tendant à plaquer le balai contre la vitre lorsque le véhicule se déplace à haute vitesse et, d'autre part, d'éviter que les filets d'air qui s'écoulent le long de la vitre ne perturbent le contact de la raclette contre la vitre, ce qui est nuisible à un bon essuyage de celle-ci.

Pour cela, il est nécessaire que le déflecteur se situe le plus près possible de la raclette et donc le plus près possible de la vitre à essuyer. Or, la raclette d'essuyage est susceptible d'épouser le galbe de la vitre qui peut s'avérer très prononcé, notamment dans le cas d'un pare-brise avant de véhicule automobile, et il est donc apparu intéressant de réaliser le déflecteur aérodynamique en matériau souple afin qu'il puisse suivre les déformations de la raclette et donc le galbe du pare-brise.

Ainsi, il a été proposé un déflecteur souple monté sur la structure articulée du balai d'essuie-glace et comportant des doigts de commande, en appui sur un dos supérieur de la raclette, susceptibles de transmettre au déflecteur les déformations de la raclette.

Toutefois, ce dispositif s'avère fort complexe car il nécessite par ailleurs des points d'attache du déflecteur sur la structure articulée qui autorisent un coulissement vertical du déflecteur par rapport à la structure articulée, et les doigts de commande des déformations du déflecteur, qui sont en appui unidirectionnel sur la raclette, ne peuvent pas provoquer le retour du déflecteur vers sa position de repos.

Il faut alors compter sur l'élasticité du matériau dans lequel est réalisé le déflecteur pour que celui-ci revienne dans sa forme initiale, ce qui implique qu'il exerce lui-même à tout moment un effort parasite sur la raclette tendant à augmenter sa pression de contact contre la vitre au centre du balai, au détriment des extrémités.

Aussi, dans le but d'apporter une solution à ces problèmes, l'invention propose un essuie-glace du type vu précédemment, caractérisé en ce que le déflecteur comporte au moins une agrafe de fixation sur la raclette du balai.

Selon d'autres caractéristiques de l'invention :
- l'agrafe de fixation comporte un dos supérieur en appui contre une face supérieure d'un talon de la raclette et deux jambes latérales parallèles qui s'étendent vers le bas depuis le dos supérieur, en regard de faces latérales du talon, et qui sont munies d'extrémités inférieures recourbées vers l'intérieur en direction de la raclette de manière à être reçues dans des logements du talon ;
- les logements du talon de la raclette sont des rainures longitudinales prévues pour l'accrochage des griffes de la structure articulée ;
- l'agrafe de fixation est reliée au déflecteur par une traverse de liaison qui s'étend depuis une face latérale du déflecteur tournée en direction du balai ;
- l'agrafe de fixation est réalisée venue de matière avec le déflecteur ;
- l'agrafe de fixation est réalisée en matière plastique rigide et le déflecteur est surmoulé sur l'agrafe ;
- le déflecteur comporte plusieurs agrafes de fixation réparties longitudinalement, notamment de manière régulière.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un essuie-glace conforme aux enseignements de l'invention ;
- la figure 2 est un détail agrandi de la figure 1 montrant plus particulièrement une agrafe de fixation du déflecteur sur le balai ;
- la figure 3 est une vue en coupe transversale suivant le plan 3-3 de la figure 2.

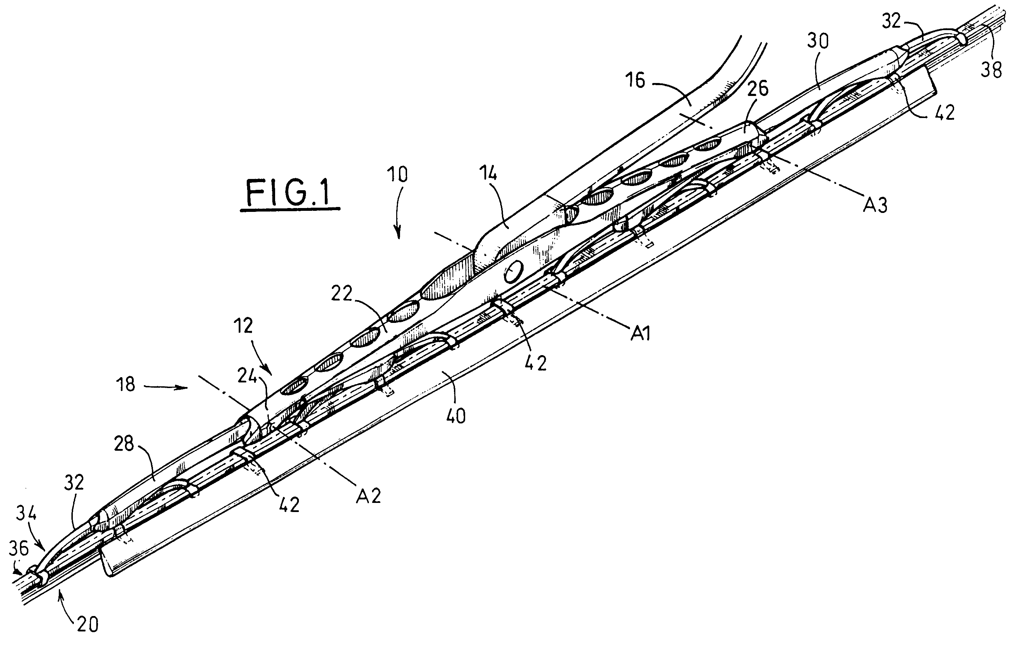

On a représenté sur la figure 1 un essuie-glace 10 de véhicule automobile comportant un balai d'essuie-glace 12 qui est monté articulé, autour d'un axe transversal A1, à l'extrémité longitudinale avant 14 d'un bras 16 qui entraîne l'essuie-glace 10 en balayage alterné.

De manière connue, le balai d'essuie-glace 12 comporte une structure articulée 18 qui s'étend dans un plan longitudinal sensiblement perpendiculaire au plan général d'une vitre à essuyer (non représentée) et qui porte une raclette d'essuyage 20 qu'elle est destinée à plaquer contre la vitre.

A cet effet, la structure articulée 18 comporte un étrier principal 22 qui est monté articulé sur l'extrémité avant 14 du bras 16 et à chacune des extrémités longitudinales 24, 26 duquel sont articulés, autour d'axes transversaux respectifs A2, A3, des étriers secondaires 28, 30 qui portent à leur tour, à chacune de leurs extrémités longitudinales, des palonniers articulés 32.

Les palonniers articulés 32 comportent à chacune de leurs deux extrémités longitudinales 34 des griffes 36 d'accrochage de la raclette 20 qui coopèrent avec un talon supérieur 38 de la raclette 20.

Le balai d'essuie-glace 12 ainsi représenté est un balai de grande longueur qui comporte de ce fait un étrier principal 22, deux étriers secondaires 28, 30 et quatre palonniers 32, et comporte ainsi huit griffes d'accrochage 36 de la raclette 20. Il va de soi que, pour un balai d'essuie-glace 12 de longueur réduite, il est possible de diminuer le nombre de griffes d'accrochage 36 en supprimant, par exemple, un palonnier 32 ou même l'un des étriers secondaires 28, 30.

Le balai d'essuie-glace 12 selon l'invention est muni d'un déflecteur aérodynamique souple 40 qui s'étend longitudinalement sur un côté de la raclette 20.

Conformément aux enseignements de l'invention, le déflecteur souple 40 comporte des agrafes de fixation 42 dont chacune est accrochée sur le talon 38 de la raclette d'essuyage 20.

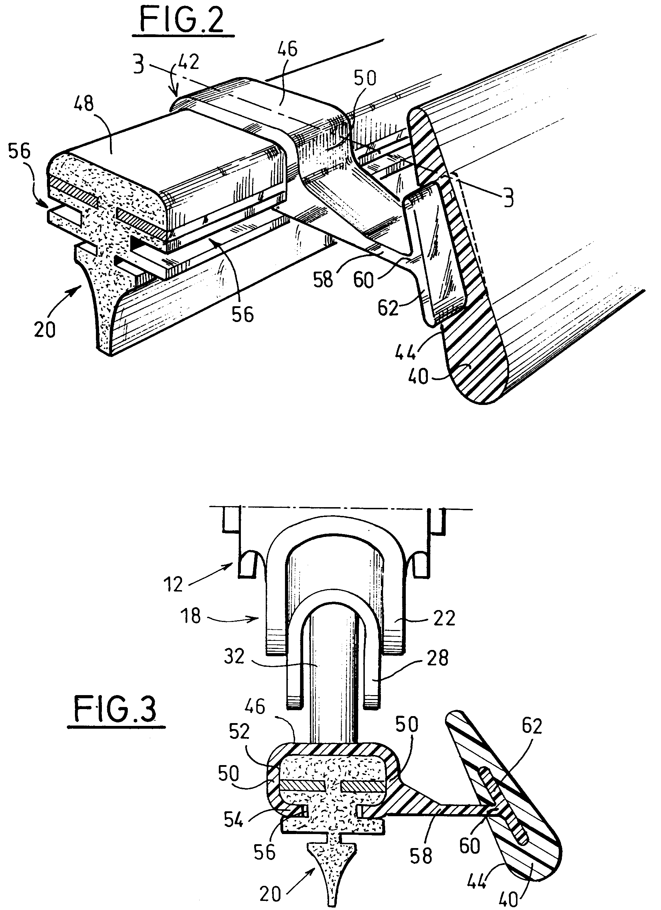

Comme on peut le voir plus particulièrement sur les figures 2 et 3, les agrafes de fixation 42 comportent une traverse de liaison 58 qui s'étend transversalement depuis une face latérale 44 du déflecteur 40 tournée en direction du balai 12.

Les agrafes de fixation 42 possèdent en section transversale une forme sensiblement identique à celle des griffes de fixation 36 de la structure articulée 18 qui portent la raclette 20.

Les agrafes 42 comportent un dos supérieur transversal 46 qui est en appui contre une face supérieure 48 du talon 38 de la raclette 20.

Deux jambes latérales 50, qui s'étendent vers le bas depuis le dos supérieur 46, le long de faces latérales 52 du talon 38, possèdent chacune une extrémité inférieure 54 qui est recourbée en direction de la raclette 20 et qui est reçue dans une rainure longitudinale 56 prévue à cet effet dans chacune des faces latérales 52 du talon 38.

De préférence, les rainures longitudinales 56 sont les rainures, déjà existantes, destinées à recevoir des extrémités recourbées (non représentées) des griffes 36 d'accrochage de la raclette 20.

Chaque agrafe de fixation 42 est ainsi susceptible de coulisser sur le talon 38 de la raclette et il et prévu des moyens complémentaires (non représentés) de blocage longitudinal du déflecteur 40 par rapport à la raclette 20.

Dans l'exemple de réalisation représenté sur les figures, les pattes de fixation 42 sont réalisées sous la forme de pièces indépendantes en matière plastique rigide dont les traverses de liaison 58 portent, à leur extrémité libre 60, une plaque d'insert 62 autour de laquelle le déflecteur 40 est surmoulé.

Ce mode de réalisation permet de réaliser le déflecteur souple en un matériau de très faible densité.

On peut également prévoir de réaliser les pattes de fixation 42 venues de matière avec le déflecteur souple, par exemple par moulage.

Il est possible de réaliser un déflecteur 40 qui ne comporte qu'une agrafe de fixation 42 sur la raclette 20 selon l'invention mais qui comporte d'autres moyens de fixation, par exemple sur la structure articulée 18 du balai 12. Dans ce cas, l'agrafe de fixation sert à commander la déformation du déflecteur 40 en fonction des déformations de la raclette 20.

## Revendications

1. Essuie-glace de véhicule automobile, du type comportant un balai d'essuie-glace (12) muni d'une structure articulée (18) qui est déformable dans un plan longitudinal perpendiculaire à une vitre à essuyer et qui porte, au moyen d'une série de griffes (36) agencées à chacune de ses extrémités terminales (34), une raclette d'essuyage (20) en matériau souple, et qui plaque la raclette contre la vitre de sorte que la raclette (20) en épouse le galbe, et du type comportant un déflecteur aérodynamique souple (40) monté sur le balai 12), caractérisé en ce que le déflecteur (40) comporte au moins une agrafe de fixation (42) sur la raclette (20) du balai (12).

2. Essuie-glace selon la revendication 1, caractérisé en ce que l'agrafe de fixation (42) comporte un dos supérieur (46) en appui contre une face supérieure (48) d'un talon (38) de la raclette (20) et deux jambes latérales parallèles (50) qui s'étendent vers le bas depuis le dos supérieur (46), en regard de faces latérales (52) du talon (38), et qui sont munies d'extrémités inférieures (54) recourbées vers l'intérieur en direction de la raclette (20) de manière à être reçues dans des logements (56) du talon (38).

3. Essuie-glace selon la revendication 2, caractérisé en ce que les logements du talon (38) de la raclette (20) sont des rainures longitudinales (56) prévues pour l'accrochage des griffes (36) de la structure articulée (18).

4. Essuie-glace selon la revendication 2 ou 3, caractérisé en ce que l'agrafe de fixation (42) est reliée au déflecteur (40) par une traverse de liaison (58) qui s'étend depuis une face latérale (44) du déflecteur (40) tournée en direction du balai (12).

5. Essuie-glace selon l'une quelconque des revendications précédentes, caractérisé en ce que l'agrafe de fixation (42) est réalisée venue de matière avec le déflecteur (40).

6. Essuie-glace selon l'une quelconque des revendications 1 à 4, caractérisé en ce que l'agrafe de fixation (42) est réalisée en matière plastique rigide et en ce que le déflecteur (40) est surmoulé sur l'agrafe (42).

7. Essuie-glace selon l'une quelconque des revendications précédentes, caractérisé en ce que le déflecteur (40) comporte plusieurs agrafes de fixation (42) réparties longitudinalement, notamment de manière régulière.
